# EUROPÄISCHE PATENTANMELDUNG

(11) **EP 0 905 918 A2**
(43) Veröffentlichungstag der Anmeldung: **31.03.1999**
(21) Anmeldenummer: 98110946.5
(22) Anmeldetag: 15.06.1998
(51) Int. Cl.: H04B 1/66, H04B 14/04

(54) **Verfahren und Vorrichtung zum Kodieren von Audiosignalen**

(30) Priorität: 24.09.1997 DE 19742201
(71) Anmelder: FRAUNHOFER-GESELLSCHAFT ZUR FÖRDERUNG DER ANGEWANDTEN FORSCHUNG E.V., 80636 München (DE)
(72) Erfinder: Koller, Jürgen, 91056 Erlangen (DE); Sporer, Thomas, 90766 Fürth (DE); Brandenburg, Karlheinz, Dr., 91054 Erlangen (DE); Seitzer, Dieter, Prof. Dr., 91054 Erlangen (DE)
(74) Vertreter: Schoppe, Fritz, Dipl.-Ing.

(57) **Zusammenfassung**

Ein Verfahren zum Codieren eines zeitdiskreten Audiosignals liefert eine verlustlose Codierung. Ein zeitdiskretes Audiosignal wird in den Frequenzbereich transformiert. Nach einer Quantisierung des transformierten Audiosignals wird das quantisierte transformierte Audiosignal wieder requantisiert und in den Zeitbereich zurücktransformiert. Eine Differenz zwischen dem rücktransformierten Audiosignal und dem ursprünglichen Audiosignal wird gebildet, wonach diese Differenz mit einer vorgegebenen Fehlerschwelle (ε₀) verglichen wird. Falls die Differenz größer als die Fehlerschwelle (ε₀) ist, werden die vorbestimmte Quantisierungsschrittgröße verringert und die Schritte des Quantisierens, Requantisierens und Rücktransformierens unter Verwendung der verringerten Quantisierungsschrittgröße wiederholt. Anderenfalls wird das mit der durch die Iteration bestimmten Quantisierungsschrittgröße quantisierte transformierte Audiosignal Entropie-codiert. Die Differenz kann im Zeitbereich codiert werden und liefert zusammen mit den codierten Spektralwerten einen verlustlosen seriellen Bitstrom, der eine variable Datenrate aufweist.

## Beschreibung

Die vorliegende Erfindung bezieht sich auf Verfahren und Vorrichtungen zum Codieren von Audiosignalen und insbesondere auf eine verlustlose bzw. nahezu verlustlose Codierung von Audiosignalen, welche besonders für Studioanwendungen geeignet ist.

Während der letzten Jahre wurde das Codieren von hochqualitativen digitalen Audiosignalen mit niedriger Bitrate standardisiert und auf den Markt gebracht. Mehrere Algorithmen, wie z. B. die MPEG-Audiofamilie oder Dolby AC-3, liefern eine gute Qualität, wenn sie bei den richtigen Bitraten verwendet werden. Alle diese Algorithmen sind jedoch verlustbehaftete Algorithmen. Es existiert eine zumindest mathematisch erkennbare Differenz zwischen dem Eingangssignal und dem Ausgangssignal. Solche Differenzen zwischen dem Eingangs- und dem Ausgangssignal sind üblicherweise nicht hörbar, sie können jedoch zu bedeutenden Nachteilen führen, wenn das Ausgangssignal eines solchen gehörangepaßten Audiodecodierers weiterverarbeitet werden soll. Eine Weiterverarbeitung, wie z. B. Filtern, Mischen und weiteres Codieren/Decodieren, kann hörbare Verzerrungen erzeugen, die in dem nicht weiterverarbeiten codierten/decodierten Signal nicht hörbar waren. Es ist wichtig, zu wissen, daß diese Effekte sehr stark von dem Eingangssignal, von dem verwendeten Komprimierungsalgorithmus und von der verwendeten Datenrate abhängen. Für viele Signale kann eine Nachverarbeitung ohne hörbare Auswirkungen möglich sein. Manche Signale sind jedoch besonders empfindlich, wodurch jede Art der Nachverarbeitung sehr schlechte Ergebnisse erzeugen kann.

Für Studioanwendungen, bei denen eine unbegrenzte Nachverarbeitung und eine unbegrenzte Tandem-Codierung möglich sein muß, werden daher robuste Codierschemen benötigt. Der Ausdruck "Tandem-Codierung" besagt die kaskadierte Codierung/Decodierung von Audiosignalen, welche implementiert werden kann, wenn mehrere gleichartige oder auch verschiedenen Audiocodierer in Kette geschaltet werden.

In einer Studioumgebung sollte eine Audiocodierung verwendet werden, da ansonsten enorme Datenmengen zu speichern sind. In diesem Zusammenhang ist der Kompressionsfaktor einer der Schlüsselparameter. Üblicherweise arbeitet ein Speichermedium im Studio viel schneller als die Datenrate, die ein Audiocodierer erzeugt. Daher ist es möglich, Audiocodieralgorithmen mit variabler Datenrate zu verwenden. Dies bedeutet, daS die Datenrate von dem augenblicklichen Inhalt des Audiosignals abhängt. Wichtige Anwendungen im Studio sind das Editieren, Filtern und Mischen. Der Aufwand für das Editieren kann wesentlich reduziert werden, wenn dasselbe mit dem codierten und nicht mit dem uncodierten Audiosignal durchgeführt werden kann. Dies führt dazu, daS kurze Codiereinheiten und geringe Verzögerungen durch studiotaugliche Audiocodieralgorithmen wünschenswert sind. Das Mischen und Filtern verändert die Frequenzstruktur und dadurch die Mithörschwellen des Signals. Ein Audiocodierer/Decodierer, der gegenüber einem Mischen robust ist, muß daher die Abhängigkeiten zwischen unterschiedlichen Frequenzen so niedrig als möglich halten. Weiterhin besteht für Studioanwendungen die Anforderung, daS ein mehrmaliges Codieren und Decodieren desselben Audiosignals, d. h. ein Tandem-Codieren, nicht zu einer Anhäufung oder Verstärkung von Codierartefakten in jedem Schritt führt. Die Endqualität sollte bereits beim ersten Codierschritt erreicht werden. Ein weiteres Codieren sollte die Audiodaten nicht mehr verändern. Ferner sei angemerkt, daß in einer Studioumgebung die Wortlänge der linearen Audioverarbeitung üblicherweise größer als 16 Bit ist. Professionelle Audiocodierer sollten daher auch eine Wortlänge größer als 16 Bit zulassen.

In der Technik sind drei verschiedene Lösungsansätze bekannt. Zum einem existiert das gehörangepaßte Audiocodieren, welches berücksichtigt, daß das menschliche Ohr der Empfänger für das decodierte Audiosignal ist, und daß dieser Empfänger nicht in der Lage ist, alle kleinen Änderungen in einem Audiosignal zu hören. Der zweite Lösungsansatz besteht in Allzweckcodierschemen, wie sie in Computern verwendet werden. Der dritte Lösungsansatz besteht in verlustlosen Audiocodierschemen, welche berücksichtigen, daß das Eingangssignal ein lineares PCM-Signal ist, und welche versuchen, die Datenrate unter Verwendung allgemeiner statistischer Gesetzmäßigkeiten von Audiosignalen zu verringern.

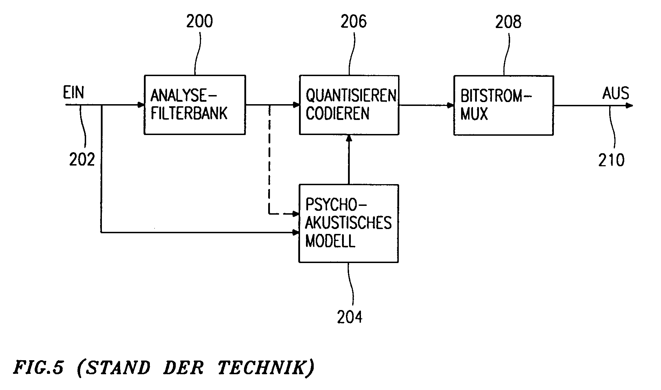

Fig. 5 zeigt einen bekannten gehörangepaßten Audiocodierer gemäß dem ersten Lösungsansatz. Eine Analysefilterbank 200 transformiert ein Eingangssignal am Eingang 202 des Codierers in den Frequenzbereich, wobei die Spektralwerte eines in Blöcken vorliegenden Eingangssignals üblicherweise in Skalenfaktorbänder gruppiert werden. Parallel dazu wird mittels eines psychoakustischen Modells 204 die sogenannte Maskierungsschwelle berechnet. Die Maskierungsschwelle zeigt die maximale Verzerrungsmenge an, welche dem Audiosignal zum jeweiligen Zeitpunkt ohne hörbare Auswirkungen hinzugefügt werden kann. Der wichtigste Effekt ist das simultane oder gleichzeitige Maskieren. Ein schwaches Signal, das der Maskierte genannt wird, ist in der Anwesenheit eines stärkeren Signals, das der Maskierer genannt wird, unhörbar. Der Maskierte und der Maskierer sind dabei frequenzmäßig gleich oder nur wenig unterschiedlich. Das psychoakustische Modell 204 berücksichtigt üblicherweise auch die zeitliche Maskierung und Stereoeffekte.

Die berechnete Maskierungsschwelle wird verwendet, um einen Block Quantisieren und Codieren 206 anzusteuern. Der Quantisierungsfehler darf nicht die Maskierungsschwelle überschreiten. Ein Bitstrommultiplexer 208 schreibt schließlich die Ausgangssignale des Blocks 206 zusammen mit zur Codierung notwendigen Seiteninformationen in einen Bitstrom, der in einem Ausgang 210 des gehörangepaßten Codierers ausgegeben wird. Üblicherweise sind gehörangepaßte Audiocodierschemen für feste Datenrate entworfen. D. h., daß der Bitstrom am Ausgang 210 ständig eine gleiche Datenrate aufweist. Wenn die notwendige Datenrate, die durch die Maskierungsschwelle definiert ist, die verfügbare Datenrate überschreitet, müssen Vorkehrungen unternommen werden, welche beispielsweise in einer gröberen Codierung oder Quantisierung liegen können, da das wichtigste Ziel eine ununterbrochene übertragung ist. Die maximal verfügbare Datenrate darf also nicht überschritten werden, selbst wenn dies hörbare Artefakte erzeugen würde. Hochqualitative Audiocodierer können eine Datenrate von 192 kbps (Kilobit pro Sekunde) für ein Stereosignal mit einer Wortlänge von 16 Bit und einer Abtastrate von 48 kHz unter Verwendung des Standards MPEG1 Layer 3 erreichen. Die Blocklänge dieses Codierschemas beträgt etwa 21 ms. Die Erweiterung der Wortlänge auf mehr als 16 Bit am Eingang führt lediglich zu einem geringen Anstieg der notwendigen Datenrate. Der Bitstrom aus komprimierten Audiosignalen verändert sich nur für Signalbereiche, bei denen die Differenz zwischen den 16 Bit und dem Wert, der größer als 16 Bit ist, hörbar ist.

Im allgemeinen wird eine Maskierung zwischen unterschiedlichen Frequenzbändern verwendet. Dies bewirkt eine hohe Empfindlichkeit gegenüber Veränderungen der Frequenzstruktur. Es ist möglich, derartige Audiocodierer gegenüber einem Filtern und Verändern des Frequenzgangs robuster zu gestalten, indem die Datenrate erhöht wird, und indem das Gehörmodell verändert wird. Wenn nur eine Maskierung innerhalb jedes Bandes zugelassen wird, dann können übliche Equalizer das Signal nicht wesentlich beschädigen. Ein Mischen von Signalen kann jedoch immer noch hörbare Artefakte erzeugen.

Dies sei anhand des folgenden Beispiels dargestellt, welches als Worst-Case-Szenario für das verlustbehaftete Codieren angesehen werden kann. Zwei Audiosignale x und y werden gemischt. Dann werden sowohl das Summensignal x + y als auch eines der ursprünglichen Signale (y) zu einem anderen Ort über einen gehörangepaßten Codierer übertragen. Das Audiocodieren führt bei beiden Signalen ein Quantisierungsrauschen ein. Die Zeit- und Frequenzstruktur der Fehlersignale e(x + y) und e(y) wird an die Eingangssignale x + y und y angepaßt. An dem vom ersten Ort entfernten zweiten Ort wird die Differenz der empfangenen Signale gemischt. Das resultierende Signal besitzt nun ein Fehlersignal e(x + y) - e(y), welches mit dem Signal y korreliert ist, welches nun jedoch hörbar sein kann. Dieser Effekt findet sich nicht nur beim gehörangepaßten Audiocodieren sondern bei allen verlustbehafteten Codierschemen. Verlustbehaftete Codierschemen sind nicht ausreichend, wenn alle mögliche Arten der Nachverarbeitung durchgeführt werden sollen. Das gehörangepaßte Audiocodieren kann daher nur verwendet werden, wenn lediglich kleinere Änderungen am Signal mittels einer Nachverarbeitung durchgeführt werden sollten. Gehörangepaßte Codierverfahren sind aus diesem Grunde für Studioanwendungen nur begrenzt geeignet.

Ein weiterer Codierlösungsansatz ist das Vielzweckcodieren, wobei derartige Softwareprogramme als "zip", "zoo" und "arj" üblicherweise in Computern implementiert sind. Diese kostenlos erhältlichen Komprimierungsprogramme sind gegenüber dem Mischen und dem Tandem-Codieren außerordentlich robust. Der Komprimierungsfaktor dieser Codierschemen für Audiosignale ist jedoch relativ schlecht. Abhängig von der Art des Audiosignals liegt die notwendige Datenrate für ein 44,1-kHz-Audiosignal mit einer Wortlänge von 16 Bit zwischen 400 kbps und mehr als 1100 kbps, wobei eine mittlere Datenrate bei etwa 900 kbps liegt. Diese bekannten Komprimierungsschemen arbeiten lediglich einigermaßen zufriedenstellend bei künstlich erzeugten Signalen. Dieselben können möglicherweise einigermaßen zufriedenstellend verwendet werden, um synthetische Musik, wie z. B. Techno-Musik und House-Musik zu codieren.

Codierschemen dieser Art arbeiten üblicherweise mit kompletten Dateien und übermitteln eine dem uncodierten Datenstrom angepaßte Codetabelle innerhalb des Bitstroms.

Die Codiereinheit ist daher ziemlich lang, wodurch ein Editieren mit dem codierten Signal selbst unmöglich ist. Eine Reduktion der Codiereinheit dürfte möglich sein, dieselbe dürfte jedoch weiter zu einer Reduktion der Codiereffizienz führen. Eine Erhöhung der Wortlänge auf mehr als 16 Bit ist möglich, dieselbe führt jedoch zu einem damit einhergehenden linearen Anstieg der Datenrate.

Verlustlose Audiocodierverfahren verwenden keine Informationen über die Langzeitstatistiken von Audiosignalen. Kenntnisse, wie Audiosignale durchschnittlich beschaffen sind, wie z. B. PCM-Abtastwerte mit 16 Bit, glatte Kurvenform, mehr Energie bei niedrigen Frequenzen, können verwendet werden, um die notwendige Datenrate zu reduzieren. Unter den verlustlosen Audiocodierverfahren ist besonders das verlustlose Prädiktionscodieren und das verlustlose Transformationscodieren zu nennen. Ein erster verlustloser Codierer, der bereits 1986 vorgestellt wurde und CSX genannt wird, verwendet einen Satz von Prädiktionsfiltern und wählt die Filter mit dem kleinsten Prädiktionsfehler für jeden Block aus. Die Nummer des ausgewählten Prädiktionsfilters und das Restsignal, das mittels eines linearen Codes codiert ist, werden zu dem Decodierer übertragen. Die Prädiktionscodierer arbeiten samt und sonders im Zeitbereich. Es sei angemerkt, daß die durchschnittlichen Datenraten, die mit Prädiktionscodierern zu erreichen sind, viel höher als die Datenraten sind, die beim gehörangepaßten Audiocodieren verwendet werden, jedoch niedriger als die durchschnittlichen Datenraten der Vielzweckcodierschemen. Da das gesamte Codieren im Zeitbereich durchgeführt wird, ist keine Steuerung der Frequenzstruktur des eingeführten Fehlers möglich.

Der Gedanke des verlustlosen Transformationscodierens wurde bereits 1992 in "Digital Audio Compression For Professional Applications", Karl-Heinz Brandenburg, Jürgen Herre, 92. AES-Convention, Wien, 24.- 27. März 1992, Preprint 3330, beschrieben. Der darin beschriebene Codierer ähnelt im wesentlichen den in Fig. 5 gezeigten Codierer. Um diesen Codierer gegenüber einer Studionachverarbeitung robuster zu gestalten, werden Modifikationen am psychoakustischen Modell vorgeschlagen, um die Gefahr von hörbaren Artefakten zu verringern, es werden jedoch keine weitergehenden Angaben über die eigentliche Codiererstruktur selbst gegeben.

Ein nahezu verlustloses Codieren ist in "Near Lossless Coding of High Qualitiy Digital Audio: First Results", Karl-Heinz Brandenburg und Robert Henke, ICASSP-93, Seiten 191 bis 196, angesprochen. Der darin vorgestellte Codierer ähnelt wieder dem in Fig. 5 dargestellten Codierer. Das darin vorgeschlagene System soll einen Restcodierfehler kleiner als das LSB (LSB = Least Significant Bit = niederstwertiges Bit) für tonale Signale liefern. Für andere Signale sollte der Restfehler zumindest weiter als 20 dB unter der Maskierungsschwelle sein. Ohne die tatsächlich verwendete Codiererimplementation zu beschreiben, werden mit Bitraten zwischen 3 und 6,5 bps (bps = Bit Per Sample = Bit pro Abtastwert) durchschnittliche Genauigkeiten von 1 LSB für 80% der Ausgangsabtastwerte erreicht. Diese eigentlich lediglich nahezu verlustlose Codierer bauen im allgemeinen nach wie vor auf dem psychoakustischen Modell und Maskierungseffekten, wobei jedoch in Anbetracht einer Weiterverarbeitung codierter/decodierter Signale frequenzabhängige Maskierungseffekte wesentlich reduziert worden sind. Allgemein kann festgestellt werden, daß derartige verlustbehaftete Codierer mittlere Komprimierungsraten liefern, die zwischen denen der gehörangepaßten Codierer und denen der Allzweckcodierer liegen.

Die Aufgabe der vorliegenden Erfindung besteht darin, ein Verfahren und eine Vorrichtung zum Codieren eines zeitdiskretes Audiosignals zu schaffen, um Studioanforderungen erfüllen zu können.

Diese Aufgabe wird durch ein Verfahren zum Codieren eines zeitdiskreten Audiosignals gemäß Anspruch 1 sowie durch eine Vorrichtung zum Codieren eines zeitdiskreten Audiosignals gemäß Anspruch 13 gelöst.

Der Sinn und Zweck der vorliegenden Erfindung besteht darin, die Vorteile des gehörangepaßten Audiocodierens und des verlustlosen Codierens zu kombinieren. Das Verfahren gemäß der vorliegenden Erfindung zeichnet sich durch die Verwendung statistischer Eigenschaften von Audiosignalen, die Analyse im Frequenzbereich und eine iterative Analyse-durch-Synthese-Prozedur aus. Das weitentwickelte Modellieren der statistischen Eigenschaften durch das verlustlose Codierschema führt zu einer Robustheit des Codierers gemäß der vorliegenden Erfindung, um Studioanforderugen, d. h. Mischen, Tandem-Codieren, usw., zu ermöglichen.

Ein zeitdiskretes Audiosignal wird zunächst in den Frequenzbereich transformiert. Anschließend wird das transformierte Audiosignal mittels einer vorbestimmten Quantisierungsschrittgröße quantisiert. Dieses quantisierte Audiosignal wird nun mittels der vorbestimmten Quantisierungsschrittgröße, die beim Quantisieren verwendet wurde, requantisiert und in den Zeitbereich zurück transformiert. Im Zeitbereich findet eine Differenzbildung zwischen dem rücktransformierten Audiosignal und dem ursprünglichen Audiosignal vorzugsweise abtastwertweise statt. Diese Differenz wird mit einer vorher festgelegten Fehlerschwelle verglichen. Falls nun die Differenz größer als die Fehlerschwelle ist, wird die vorbestimmte Quantisierungsschrittgröße verringert und das Quantisieren, Requantisieren, Transformieren und Differenzbilden wiederholt, bis die Differenz kleiner oder gleich der Fehlerschwelle ist. Dann wird das quantisierte transformierte Audiosignal im Frequenzbereich unter Verwendung einer Entropie-Codierung beispielsweise mittels Huffman-Tabellen codiert. Wird die Fehlerschwelle derart eingestellt, daß der Codierfehler kleiner als das LSB ist, so handelt es sich um eine verlustlose Codierung. "Verlustlose Codierung" bedeutet in dieser Anmeldung, daS beispielsweise ein 16-Bit-Wort am Eingang eines Codierers genau dem 16-Bit-Wort am Ausgang eines entsprechenden Decodierers entspricht. Wird die Fehlerschwelle derart eingestellt, daß ein Codierfehler zugelassen ist, der zu einer zumindest mathematisch erfaßbaren Differenz zwischen dem codierten/decodierten Signal und dem ursprünglichen Signal führt, d. h. das LSB des Ausgangsworts des Decodierers kann sich von dem LSB des Eingangsworts des Codierers unterscheiden, handelt es sich um einen verlustbehafteten Codierer. Um dennoch einen verlustlosen Codierer zu erreichen, wird vorzugsweise das Restsignal, d. h. die Differenz, im Zeitbereich hier beispielsweise mittels einer Huffman-Codierung codiert. Durch Decodieren der codierten Frequenzwerte und der Fehlerwerte im Zeitbereich kann das ursprüngliche Signal vollständig oder verlustlos wiederhergestellt werden. Ein derartig ausgeführter Codierer wird eine variable Datenrate für die Codierung im Frequenzbereich und eine annähernd feste Datenrate für die Codierung im Zeitbereich, d. h. für das Restsignal, liefern.

Gemäß einem weiteren Ausführungsbeispiel der vorliegenden Erfindung wird der beschriebene verlustlose Codierer, der iterativ die Quantisierungsschrittgröße einstellt, um eine iterative Datenratensteuerung erweitert. Ein zeitdiskretes Audiosignal wird verlustlos codiert, wobei eine Ratensteuerung ermittelt, welche Datenrate benötigt wird. Ist die Datenrate höher als eine vorher festgelegte Datenrate, so werden bestimmte Frequenzanteile des Signals mit einer gröberen Quantisierungsschrittgröße quantisiert, um die Datenrate zu verringern. Vorzugsweise werden Frequenzbereiche des zeitdiskreten Audiosignals ausgewählt, welche sehr wahrscheinlich trotz gröberer Quantisierung zu keinen hörbaren Fehlern führen. In diesem Fall handelt es sich um einen nahezu verlustlosen Codierer, wobei das Fehlerrestsignal der gröber quantisierten Spektralanteile wiederum optional im Zeitbereich codiert werden kann, um aus den codierten Daten im Frequenzbereich und aus den codierten Daten im Zeitbereich das ursprüngliche Signal wieder vollständig herstellen zu können, um wieder eine verlustlose Codierung zu erhalten.

Die vorangegangene Diskussion zeigt, daß das Codiererkonzept gemäß der vorliegenden Erfindung soweit als möglich verlustlos codiert und nur wenn unbedingt notwendig zu einer verlustbehafteten Codierung übergeht. Ferner liefert es eine ausgezeichnete Flexibilität, um ohne größeren Aufwand von einer verlustlosen auf eine verlustbehaftete Codierung und umgekehrt überzugehen. Im Sinne einer großen Flexibilität und Robustheit wird auf das psychoakustische Modell nahezu gänzlich verzichtet. Lediglich in der Ratensteuerschleife gemäß einem zweiten Ausführungsbeispiel der vorliegenden Erfindung wird eine einfache Frequenzgruppierung durchgeführt, um tonale Frequenzbänder von nicht-tonalen Frequenzbändern unterscheiden zu können. Dies führt dazu, daß die Codierung im Frequenzbereich und die Codierung im Zeitbereich optimal kombiniert werden, da tonale Signalanteile besonders effizient codiert werden können, während Rauschsignalanteile ("weiße" Signalteile ) sehr ungünstig codiert werden können, dafür aber bedingt durch psychoakustische Effekte robuster gegenüber einer Nachbearbeitung (Filtern, Mischen, Tandem-Codieren) sind. Das Fehlerrestsignal im Zeitbereich wird ein annähernd weißes Signal sein, welches im Falle des ersten Ausführungsbeispiels der vorliegenden Erfindung eine feste Datenrate haben wird, und welches im Falle des zweiten Ausführungsbeispiels der vorliegenden Erfindung, das neben der Quantisierungsschleife auch eine Ratensteuerschleife umfaßt, eine variable Datenrate besitzt.

Bevorzugte Ausführungsbeispiele der vorliegenden Erfindung werden nachfolgend bezugnehmend auf die beiliegenden Zeichnungen detaillierter erläutert. Es zeigen:
- FIG. 1: ein Blockdiagramm eines verlustlosen Codierers gemäß einem ersten Ausführungsbeispiel der vorliegenden Erfindung;
- FIG. 2: eine Skizze zur Veranschaulichung der Analyse des Codierfehlers im Zeitbereich bei Verwendung von überlappenden Blöcken;
- FIG. 3: ein Beispiel für die Variation der Bitrate als Funktion der Zeit im Frequenzbereichsteil des Codierers und im Zeitbereichsteil des Codierers;
- FIG. 4: ein Blockdiagramm eines Codierers gemäß einem zweiten Ausführungsbeispiel der vorliegenden Erfindung, welcher sowohl im verlustlosen als auch im nahezu verlustlosen Modus arbeiten kann; und
- FIG. 5: ein Blockdiagramm eines bekannten gehörangepaßten Audiocodierers.

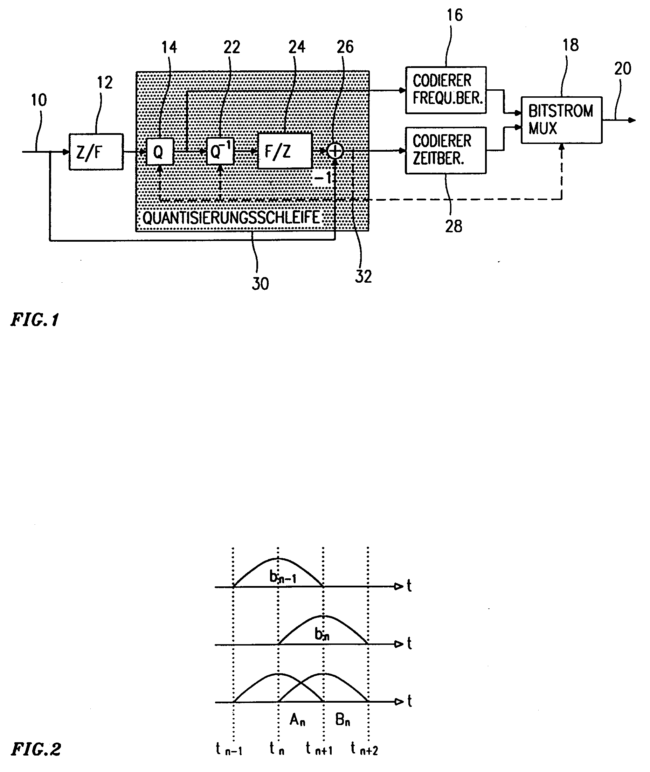

FIG. 1 zeigt einen Codierer gemäß einem ersten Ausführungsbeispiel der vorliegenden Erfindung. Derselbe umfaßt einen Eingang 10, in den zeitdiskrete Audiosignale eingespeist werden können. Die zeitdiskreten Audiosignale liegen vorzugsweise als digitale Worte einer bestimmten Bitbreite vor, welche 16 beträgt oder größer ist. Liegt das zeitdiskrete Audiosignal analog vor, so kann am Eingang 10 ein einfacher A/D-Wandler eingesetzt werden. Das zeitdiskrete Audiosignal wird mittels eines Blocks Z/F 12 vom Zeitbereich in den Frequenzbereich transformiert. Am Ausgang des Z/F-Blocks 12 findet sich eine spektrale Darstellung des zeitdiskreten Audiosignals am Eingang 10. Die spektrale Darstellung wird mittels eines Quantisierers 14 quantisiert und unter bestimmten Umständen mittels eines Codierers 16, der im Frequenzbereich arbeitet, d. h. der Spektralwerte codiert, codiert und in einen Bitstrom-Multiplexer 18 eingespeist, welcher an seinem Ausgang 20 einen seriellen Bitstrom erzeugt, der zum einen codierte Daten und zum anderen zur Decodierung notwendige Seiteninformationen enthält.

Wie es aus FIG. 1 ersichtlich ist, wird das Ausgangssignal des Quantisierers 14, d. h. das quantisierte transformierte zeitdiskrete Audiosignal, in einem Requantisierer 22 requantisiert und mittels eines Blocks F/Z 24 wieder in den Zeitbereich rücktransformiert. Eine Vergleichseinrichtung 26 in Form eines Addierers oder Subtrahierers erzeugt an ihrem Ausgang eine Differenz zwischen dem rücktransformierten quantisierten und wieder requantisierten Audiosignal und dem zeitdiskreten Audiosignal am Eingang 10. Diese Differenz wird mittels eines Codierers 28, der im Zeitbereich arbeitet, d. h. der zeitliche Werte codiert, codiert und ebenfalls in den Bit-Strom-Multiplexer 18 eingespeist, wodurch der serielle Bit-Strom am Ausgang 20 neben Seiteninformationen und codierten Spektralwerten auch vorzugsweise codierte Zeitbereichswerte umfaßt.

Wie es aus FIG. 1 ersichtlich ist, umfaßt der dargestellte verlustlose Codierer eine Quantisierungsschleife 30, die eine iterative Einstellung der Quantisierungsschrittgröße im Quantisierer 14 und im Requantisierer 22 abhängig von der Differenz am Ausgang der Vergleichseinrichtung steuert, wie es durch gestrichelte Rückkopplungsleitungen 32 dargestellt ist. Informationen über die Quantisierungsschrittgröße werden über eine Steuerleitung 33 ebenfalls dem Bitstrommultiplexer 18 übertragen, der dieselben dem Bitstrom als Seiteninformationen zufügt.

Im nachfolgenden wird die Funktionsweise des in FIG. 1 dargestellten Codierers erläutert. Mittels des Blocks Z/F 12 wird eine Transformation vom Zeitbereich in den Frequenzbereich durchgeführt, wodurch das zeitdiskrete Audiosignal am Eingang 10 in seine Spektralkoeffizienten zerlegt wird. Vorzugsweise wird die in der Technik bekannte modifizierte diskrete Kosinustransformation (MDCT) verwendet. Diese Transformation ist besonders deshalb geeignet, da sie eine kritische Abtastung, eine Blocküberlappung und eine gute Frequenzauflösung liefert. Die Verwendung überlappender Blöcke erscheint auf den ersten Blick nachteilig, da sie die Länge einer Codiereinheit erhöht. Diese Uberlappung ermöglicht es jedoch, auch im nahezu verlustlosen Modus zu arbeiten, wie es weiter hinten beschrieben wird. Aufgrund der Überlappung zwischen Blöcken führen Differenzen in benachbarten Blöcken in der Nähe der Blockgrenze nicht zu hörbaren Verzerrungen.

Wie es weiter hinten dargestellt wird, führt jedoch die vorzugsweise Verwendung von überlappenden Blöcken dazu, daß Fehler im vorhergehenden bzw. im nachfolgenden Block den Fehler, der durch die Quantisierung eingeführt wird, im aktuellen Block beeinflussen.

Die Quantisierungsschleife 30, die aus dem Quantisierer 14, dem Requantisierer 22, dem F/Z-Block 24 und der Vergleichseinrichtung 26 sowie aus den Rückkopplungsleitungen 32 besteht, führt zu einer iterativen Einstellung der Quantisierungsschrittgröße, welche sowohl im Quantisierer 14 als auch im Requantisierer 22 verwendet wird. Die Frequenzkoeffizienten werden quantisiert, um die Anzahl möglicher Werte zu reduzieren, d. h. um eine Kompression zu erreichen. Aufgrund der Struktur der Filterbank im Block Z/F 12 beeinflußt der Quantisierungsfehler, der in jedem einzelnen Koeffizienten bewirkt wird, die meisten wenn nicht alle Zeitbereichsabtastwerte des tatsächlichen Blocks. Dies ist leicht ersichtlich aus der Tatsache, daß durch die Quantisierung ein Spektralwert verändert wird, welcher durch die Transformation aus vielen wenn nicht allen Zeitbereichsabtastwerten entsteht. Eine Veränderung des Spektralwerts wird daher ebenfalls alle Abtastwerte im Zeitbereich verändern, welche zu dem Spektralwert "beitragen". Aus diesem Grunde ist eine nicht iterative einfache Berechnung der maximalen Quantisierungsschrittgröße, welche im Zeitbereich vernachlässigbare Fehler erzeugt, nahezu unmöglich. Gemäß der vorliegenden Erfindung wird daher ein iteratives Verfahren verwendet, um diese Problem zu überwinden. An dieser Stelle sei angemerkt, daß abgesehen von numerischen Fehlern tatsächliche Codierfehler weder durch die Zeitbereich/Frequenzbereich-Transformationen noch durch Entropie-Codierverfahren, wie z. B. Huffman-Codierverfahren, eingeführt werden. Wesentliche Codierfehler werden jedoch durch die Quantisierung der Spektralwerte eingeführt, wobei diese Quantisierung jedoch durchgeführt werden muß, um einen Codiergewinn zu erreichen. Das Bestreben, einen möglichst großen Codiergewinn und dennoch keine hörbaren oder auch für Studioanwendungen keine meßbaren Fehler zu erzeugen, führt dazu, daß eine optimale Quantisierungsschrittgröße iterativ bestimmt wird.

Das in der Quantisierungsschleife 30 durchgeführte iterative Verfahren stellt sich folgendermaßen dar. Vorzugsweise wird das gesamte Spektrum unter Verwendung psychoakustischer Kriterien in Bänder aufgeteilt. Die Verwendung psychoakustischer gehörangepaßter Kriterien ist nicht zwingend. Sie bietet sich jedoch an, da es als sehr wahrscheinlich angesehen werden kann, daß Signale wie z. B. Musik oder Sprache, welche für das menschliche Gehörsystem gedacht sind, eine Signalstatistik haben, die durch eine psychoakustische Aufteilung des Spektrums in Frequenzbänder gut dargestellt werden kann. Die Aufteilung des Spektrums in Frequenzbänder, welche an das menschliche Gehör angepaßt sind, ist in der Technik bekannt und bereits unter anderem in verschiedenen Standards der MPEG-Familie unter der Bezeichnung "Skalenfaktorbänder" implementiert.

Eine vorgegebene feste Quantisierungsschrittgröße wird nun für alle Bänder und alle Koeffizienten als Ausgangspunkt verwendet. Alle Koeffizienten werden nun im Quantisierer 14 quantisiert, wieder requantisiert und in den Zeitbereich rücktransformiert. Das Ergebnis des Frequenzbereich/Zeitbereich-Transformationsblocks 24 wird in der Vergleichseinrichtung 26 mit dem ursprünglichen zeitdiskreten Audiosignal verglichen. Damit wird der durch das Quantisieren eingeführte Fehler ε für jeden einzelnen zeitdiskreten Abtastwert des zeitdiskreten Audiosignals am Eingang 10 des Codierers bestimmt. Wenn der Zeitbereichsfehler vorzugsweise zumindest eines einzigen Abtastwerts eine ebenfalls fest einstellbare Fehlerschwelle ε₀ überschreitet, wird der Quantisierungseinrichtung 14 mittels der Rückkopplungsleitungen 32 mitgeteilt, daß die Quantisierungsschrittgröße verringert werden muß. Die Quantisierungsschrittgröße, die zu Anfang als Ausgangswert vorzugsweise relativ grob eingestellt worden ist, um eine möglichst geringe Datenrate zu erreichen, wird nun um einen bestimmten Betrag verringert, wonach die Iteration wiederholt wird. Falls die Differenz am Ausgang der Vergleichseinrichtung 26 vorzugsweise für jeden zeitlichen Abtastwert kleiner als die Fehlerschwelle ε₀ ist, wird die Iteration beendet, und die mit der iterativ bestimmten Quantisierungsschrittgröße quantisierten Spektralwerte werden im Frequenzbereichscodierer 16 codiert, während die noch vorhandenen Fehlerrestsignale, d. h. die besagte Differenz, im Zeitbereichscodierer 28 optional codiert werden, um in den Bit-Strom am Ausgang 20 durch den Bit-Strom-Multiplexer 18 geschrieben zu werden. An dieser Stelle ist zu sehen, daß, um einen verlustlosen Codierer zu erhalten, bei genügend geringer Einstellung der Fehlerschwelle ε₀ die Differenz vernachlässigbar klein sein wird. Wird für die Fehlerschwelle ein bestimmter Kompromiß gewählt, so ist es möglich, einem Empfänger der Audiodaten entweder lediglich die codierten Frequenzbereichsdaten zur Verfügung zu stellen, die bereits eine sehr gute Annäherung an das zeitdiskrete Audiosignal am Eingang 10 des Codierers sind. Für Studioanwendungen wird es jedoch aufgrund möglicher Nachverarbeitungen des Audiosignals erforderlich sein, die Differenz ebenfalls im Zeitbereich zu codieren und im Bit-Strom mitzuübertragen.

Wie es bereits im vorhergehenden erwähnt wurde, wird vorzugsweise eine MDCT mit überlappenden Blöcken verwendet. Dies bedeutet, daß bei der Ermittlung des Fehlers im aktuellen Block in der Vergleichseinrichtung 26 sowohl der vorangegangene Block als auch der nächste Block berücksichtigt werden müssen, da sowohl der vorangegangene als auch der nächste Block den aktuellen Block beeinflussen.

FIG. 2 zeigt eine Skizze, um die Analyse des Zeitbereichsfehlers bei überlappenden Blöcken darzustellen. Betrachtet wird ein aktueller Block bₙ sowie ein vorangegangener Block bₙ₋₁, welche bei einem bevorzugten Ausführungsbeispiel der vorliegenden Erfindung eine 50%-ige Überlappung aufweisen. Für Fachleute ist es jedoch offensichtlich, daß auch andere Überlappungen die kleiner oder größer als 50% sind, verwendet werden können. Zur Analyse des Fehlers im aktuellen Block bₙ wird dieser Block in zwei Regionen Aₙ und Bₙ aufgeteilt, wobei die erste Region oder der erste Bereich 7Aₙ eine Überlappung des aktuellen Blocks mit dem vorherigen Block aufweist während der zweite Bereich Bₙ eine Überlappung des aktuellen Blocks mit dem nächsten zu verarbeitenden Block umfaßt. Der Gesamtfehler in dem Bereich Aₙ des Block bₙ hängt also von dem Fehler in dem gegenwärtigen Block bₙ und von dem Fehler in dem Block bₙ₋₁ ab. Der Gesamtfehler in dem Bereich Bₙ hängt dagegen von dem Fehler des aktuellen Blocks und von dem Fehler des nächsten Blocks bₙ₊₁ ab.

Es besteht nun das Problem, daß der in dem Block bₙ₊₁ bewirkte Fehler zu dem Zeitpunkt noch unbekannt ist, zu dem der Block bₙ verarbeitet werden muß. Dagegen ist der Fehler im vorhergehenden Block bₙ₋₁ bekannt und fest. Der Gesamtfehler in dem ersten Bereich Aₙ des aktuellen Blocks bₙ kann berechnet werden, indem das ursprüngliche zeitdiskrete Audiosignal am Eingang 10 des Codierers von dem decodierten Signal des aktuellen Blocks, das mit dem decodierten Signal des vorangegangenen Blocks überlappt ist, abgezogen wird. In diesem Bereich darf der maximale Gesamtfehler für einen Abtastwert nicht die Fehlerschwelle ε₀ im Zeitbereich überschreiten.

In dem Bereich B_{N} hängt dagegen der gesamte Zeitbereichsfehler eines Abtastwerts von dem Fehler des aktuellen Blocks bₙ und von dem Fehler des (unbekannten) folgenden Blocks bₙ₊₁ ab. Nur der durch den aktuellen Block bewirkte Fehler ist aus der Analyse bekannt. Ein Schätzwert des Fehlers wird erhalten, indem das requantisierte und in den Zeitbereich transformierte Ausgangssignal des ersten Quantisierers 14 mit dem unquantisierten und rücktransformierten Signal nach der Festerung verglichen wird. Aufgrund des Einflusses des unbekannten nächsten Blocks muß der maximale Fehler in dieser Region unter (ε₀ + 0,5)/2 sein, wenn eine 50%-ige Überlappung gewählt wird. Auf diese Weise wird garantiert, daß nach der Überlappung der Ergebnisse der zwei Blöcke der resultierende Fehler auf einen Wert unter der Fehlerschwelle ε₀ gebracht werden kann. Hier sei angemerkt, daß das Überlappen sowohl aus dem Addieren also auch dem Runden besteht.

Wie bereits erwähnt wurde, wird die Quantisierungsschrittgröße verringert, wenn der Zeitbereichsfehler die Fehlerschwellen ε₀ bzw. (ε₀ + 0,5)/2 für vorzugsweise zumindest einen oder alternativ zumindest einige Abtastwerte überschreitet. Wenn eine Frequenzgruppierung der Spektralwerte des diskreten Audiosignals am Eingang 10 des Codierers verwendet worden ist, kann vorzugsweise eine frequenzselektive Quantisierung angewendet werden, um für möglichst viele Spektralwerte eine gröbere Quantisierung zu verwenden, wobei nur für ein paar Spektralwerte eine veränderte Quantisierung eingesetzt wird, um den Komprimierungsgewinn maximal zu halten. Dazu kann das Band, das den größten Teil des Fehlers im Zeitbereich bewirkt, feiner quantisiert werden, während die Quantisierung der anderen Frequenzbänder nicht verändert wird. Wie es bereits erwähnt wurde, wird dieser Schritt iteriert, bis der Zeitbereichsfehler unter der Fehlerschwelle ε₀ bzw. (ε₀ + 0,5)/2 liegt.

Die so quantisierten Frequenzkoeffizienten werden nun vorzugsweise unter Verwendung eines statischen Huffman-Codes im Frequenzbereichscodier 16 codiert. Eine Adaption an unterschiedliche statistische Eigenschaften der quantisierten Werte wird durchgeführt, indem zwischen verschiedenen Codetabellen umgeschaltet wird. Aufgrund der schnellen Adaption und des niedrigen Übertragungsaufwands ist eine Tabellenumschaltung effizienter als dynamische Huffman-Codes, wenn Audiosignale betrachtet werden.

Beim verlustlosen Codieren ist der Bereich für die quantisierten Koeffizienten relativ groß. Dies führt zu zwei Problemen. Codetabellen werden sehr groß und es ist sehr schwierig, statistische Gesetzmäßigkeiten zu erhalten, wenn jeder Wert mehrere Male auftritt. Zur Lösung bieten sich sogenannte gestapelte ("stacked") Huffman-Codes an, die in der Technik bekannt sind. In einem ersten Schritt werden alle Werte, die das Maximum einer gegebenen Tabelle nicht überschreiten, codiert. Werte, die die Tabelle überschreiten, werden durch einen speziellen Eintrag in die Tabelle, den sogenannten Escape-Code, codiert. Der Escape-Code signalisiert, daß zusätzliche Informationen folgen müssen. Der Rest (die Differenz zwischen dem tatsächlichen Wert und dem Maximum der Tabelle) wird unter Verwendung einer zweiten Huffman-Code-Tabelle codiert. Diese Tabelle besitzt ebenfalls einen Escape-Code für ihren maximal codierbaren Wert. Wenn das Maximum in dieser zweiten Tabelle überschritten ist, wird der resultierende Rest unter Verwendung einer dritten Tabelle codiert, usw. Dies wird wiederholt durchgeführt, bis der gesamte Wert codiert ist.

Anschließend wird die Funktionsweise des Codierers 28 im Zeitbereich dargestellt. Um ein verlustloses Codieren zu erreichen, wird der restliche Zeitbereichsfehler, d. h. die Differenz am Ausgang der Vergleichseinrichtung 26, codiert. Aufgrund des Wesens der verlustbehafteten Codiererstufe in Form der Quantisierungsschleife 30 ist der Maximalfehler im Zeitbereich von vornherein bekannt. Zwei unterschiedliche Ansätze zum Codieren des zeitlichen Fehlers bieten sich an. Wenn die meisten Restabtastwerte im Zeitbereich nahezu 0 sind, ist ein Verfahren zur Angabe der Position und des Werts der Differenz-Abtastwerte am effizientesten. Wenn zeitliche Fehler häufiger auftreten, ist ein Huffman-Codieren des zeitlichen Fehlers besser. Aufgrund der kleinen Anzahl von unterschiedlichen Werten für einen Fehler im Zeitbereich, besonders für kleine Werte von ε₀, werden mehrdimensionale Huffman-Codes verwendet. Es hat sich gezeigt, daß bei einer Fehlerschwelle ε_{O} = 2 die theoretische Grenze für das statische Codieren mittels eines vierdimensionalen Huffman-Codes erreicht ist. Für einen Fehler ε ≥ 16 kann dagegen ein eindimensionaler Huffman-Code effizient verwendet werden.

Wenn kleine Fehlerschwellen ε₀ zum Einsatz kommen, ist es, wie bereits erwähnt wurde, ausreichend, lediglich die Position eines Differenz-Abtastwerts ungleich 0 bezüglich des Blockanfangs und den Wert der Differenz anzugeben, da davon ausgegangen werden kann, daß die meisten Differenz-Abtastwerte gleich 0 sind. Hier kann vorzugsweise zur weiteren Erhöhung des Codiergewinns ebenfalls eine Positions-Differenzcodierung eingesetzt werden, wobei der Zeitbereichscodierer 28 nicht die absolute Position eines Differenz-Abtastwerts bezüglich des Blockanfangs sondern lediglich den Abstand eines weiteren Fehlerwerts vom vorhergehenden Fehlerwerts codiert. Wird der Zeitbereichscodierer 28 zusätzlich zum Frequenzbereichscodierer 16 eingesetzt, liefert der in Fig. 1 gezeigte Codierer einen verlustlosen Betrieb, der dadurch gekennzeichnet ist, daß ein verlustbehafteter primärer Datenstrom durch den Frequenzbereichscodierer 16 erzeugt wird, während das Fehlersignal in einem sekundären Datenstrom durch den Zeitbereichscodierer 28 codiert wird, um die mittlere Datenrate zu verringern, da der Maximalwert ε des Fehlersignals nur selten erreicht wird. Der Fehler ist in der Regel kleiner, da die Schleife mit einer Worst-Case-Abschätzung arbeitet.

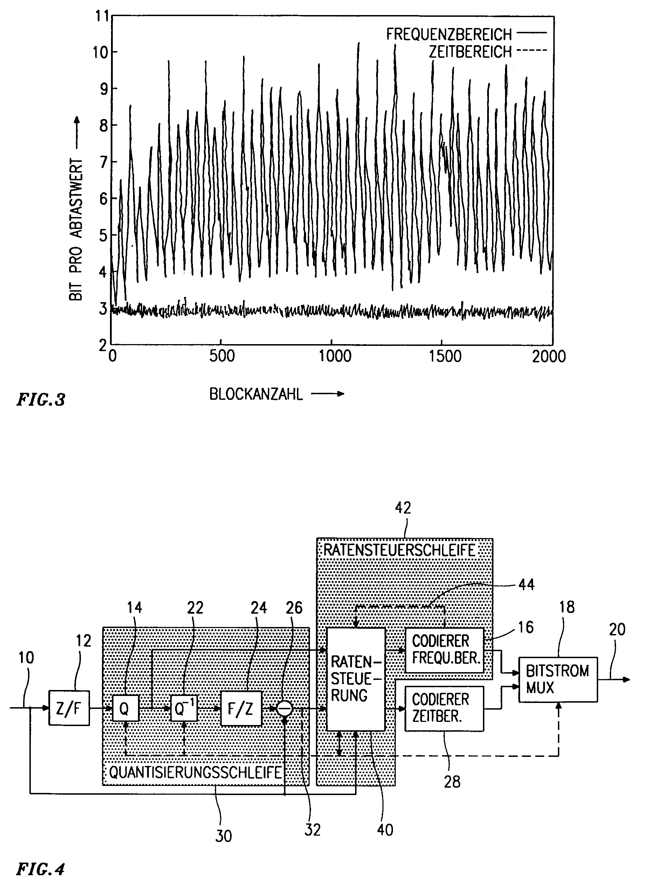

Fig. 3 zeigt eine Situation, bei der die Fehlerschwelle ε₀ auf sechzehn eingestellt worden ist, was bei diesem Beispiel zu einer Datenrate von durchschnittlich 2,9 pro Abtastwert führt. Für ein bestimmtes Testsignal ist hierfür die Variation der Datenrate (Bit pro Abtastwert) über der Zeit, d. h. der Blockanzahl oder laufenden Blocknummer, dargestellt. Es ist zu sehen, daS der in Fig. 1 gezeigte Codierer eine variable Datenrate im Primärdatenstrom und eine im wesentlichen konstante Datenrate im Sekundärdatenstrom liefert.

Wenn die Datenrate des Primärdatenstroms mit der Datenrate des Sekundärdatenstroms kombiniert wird, um eine Gesamtdatenrate im Bitstrom am Ausgang des Bitstrommultiplexers 20 zu liefern, so bleibt festzustellen, daß mittels der Fehlerschwelle ε₀ ein optimaler Kompromiß zwischen dem Codieren im Frequenzbereich und dem Codieren im Zeitbereich erreicht werden kann. Kleine Werte von ε₀ führen zu höheren Datenraten im Frequenzbereich. Die Datenrate zum Codieren des Restsignals ist dann niedrig oder sogar 0. Die Anzahl der Berechnungen in der Iterationsschleife ist dagegen hoch. Höhere Werte von ε₀ verringern die Komplexität in der Iterationsschleife und die Datenrate des Frequenzbereichsanteils des Bitstroms. Die Datenrate der Zeitfehlerkorrektur erhöht sich dagegen. Untersuchungen haben gezeigt, daß die beste verlustlose Kompression mit einer Fehlerschwelle ε₀ = 16 erreicht werden kann. Für verschiedene Testaudiosignale können hier Datenraten von 6 bis 7 Bit pro Abtastwert erreicht werden. Die nötige Datenrate hängt jedoch stark vom Audiotestsignal ab. Für andere Testsignale können bereits bei einer Fehlerschwelle ε₀ von 8 Datenraten unter 4 Bit pro Abtastwert erreicht werden, während wiederum andere sehr "ungünstige" Testsignale zu Datenraten über 8 Bit pro Abtastwert bei einer Fehlerschwelle von ε₀ = 32 führen.

Fig. 4 zeigt ein zweites Ausführungsbeispiel gemäß der vorliegenden Erfindung in Form eines nahezu verlustlosen Codierers, der jedoch ebenfalls unter Verwendung des Zeitbereichscodierers 28 als verlustloser Codierer arbeiten kann. Tonale Signale sind sehr empfindlich auf eine Nachverarbeitung, es ist jedoch relativ einfach, dieselben mit einem verlustlosen Transformationscodierer zu codieren. Rauschartige Signale benötigen zum verlustlosen Codieren eine höhere Datenrate, sie sind jedoch nahezu unempfindlich auf eine Nachverarbeitung, wenn bestimmte Grenzen für die Maskierung und ein Sicherheits-Signal/Rausch-Abstand sichergestellt wird. Das nahezu verlustlose Codieren vervendet ein verlustloses Schema für tonale Signale und ein einfaches gehörangepaßtes Codieren für rauschartige Signale. Die Steuerleitung 33 verläuft hier im Gegensatz zum ersten Ausführungsbeispiel von Fig. 1 von der Leitung 32 in die Ratensteuerung 40 und auch in den Bitstrommultiplexer 18, wie es in der Fig. gezeigt ist.

Um zwischen dem verlustlosen und der verlustbehafteten Codieren umzuschalten, wird ein sogenanntes Chaos- oder Tonalitätsmaß verwendet, dessen Ermittlung und Bedeutung z. B. von K. Brandenburg und J. D. Johnston in "Second Generation Perceptual Audio Coding: The Hybrid Coder", 88. AES-Convention, Montreaux, 1990, preprint 2937, und von J. D. Johnston and K. Brandenburg in "Wideband Coding - Perceptual Considerations For Speech And Music, in "Advances in Speech Signal Processing", Dekker, New York, 1991 dargestellt ist.

Um von dem Codierer gemäß dem ersten Ausführungsbeispiel, der in Fig. 1 dargestellt ist, zum Codierer gemäß dem zweiten Ausführungsbeispiel, der in Fig. 4 dargestellt ist, zu gelangen, kann zunächst die Fehlerschwelle ε₀ auf 0,5 oder kleiner eingestellt werden. Nach einer Rundung entspricht dies einem Fehler, der kleiner als das niederstwertige Bit des digitalen Eingangswortes bzw. Ausgangswortes ist. Dieser Fehler ist daher mathematisch nicht merkbar, der Codierer in Fig. 1, der einen Teil des Codierers in Fig. 4 bildet, arbeitet somit im vollständig verlustlosen Modus. Der aktuelle Block wird daher zunächst verlustlos codiert und die dazu nötige Datenrate in einer Ratensteuerung 40 bestimmt, die einen Teil einer Ratensteuerschleife 42 bildet. Für jeden Spektralbereich, vorzugsweise jedes Skalenfaktorband oder sogar jeden Spektralwert, wird nun ein Tonalitätsindex in der Ratensteuerung 40 bestimmt, woraus sich ergibt, welche Spektralbereiche rauschartige Signale enthalten, und welche tonale Signale enthalten.

Bekannterweise kann ein Tonalitätsindex bestimmt werden, wenn in einem Spektralbereich bestimmte Spitzen auftreten, die sich um einen bestimmten Betrag von anderen Spektralwerten in diesem Bereich abheben. Eine andere Möglichkeit besteht darin, eine klassische Prädiktion oder ein Kreuzprodukt für die Spektralwerte durchzuführen. Dieser Methode liegt der Gedanke zugrunde, daß tonale Signale über mehrere aufeinanderfolgende Blöcke vorhanden sind, weshalb bei tonalen Signalen die entsprechenden Spektralwerte aus vorangegangenen Blöcken vorhergesagt werden können.

Der in Fig. 4 gezeigte Codierer eignet sich für eine Codierung mit fest vorgegebener Datenrate, während der in Fig. 1 gezeigte Codierer variable Datenraten liefert, wie es aus Fig. 3 zu sehen ist. Ist die notwendige Datenrate zur verlustlosen Codierung kleiner oder gleich der zur Verfügung stehenden, bzw. fest vorgegebenen Datenrate, dann wird der so entstandene Block mittels der Ratensteuerung 40 zu dem Frequenzbereichscodierer 16 durchgeschaltet. Ist die notwendige Datenrate jedoch größer als die zur Verfügung stehende Datenrate, so wird dies vom Codierer im Frequenzbereich 16 über eine Ratenrückkopplung 44 der Ratensteuerung 40 mitgeteilt. Die Ratensteuerung 40 veranlaßt nun, daß Spektralbereiche mit rauschartigen Signalen, d. h. bei denen das Tonalitätsmaß unter einer bestimmten Grenze ist, gröber quantisiert werden. Um dies zu erreichen, kann auf verschiedene Strategien zurückgegriffen werden, wobei im wesentlichen auf nicht-tonale Bänder zugegriffen wird.

Zunächst kann das Band mit dem größten Signal/Rausch-Verhältnis ausgewählt werden, wobei die Ratensteuerung für jedes Band das Signal/Rausch-Verhältnis ermitteln muß. Eine weitere Möglichkeit liegt in der Auswahl des Bandes mit der höchsten Mittenfrequenz. Aus der Einteilung der Skalenfaktorbänder ergibt sich, daß Skalenfaktorbänder höherer Mittenfrequenzen im allgemeinen breiter sind, da die Frequenzauflösung des menschlichen Ohres zu höheren Frequenzen hin zurückgeht. Es kann nun ein Frequenzband mit höherer bzw. mit der höchsten Mittenfrequenz ausgewählt werden. Dieses Band wird relativ viele Spektralwerte enthalten, welche alle sozusagen "auf einmal" gröber quantisiert werden, wodurch sich ein wesentlicherer Einfluß auf die benötigte Datenrate ergibt, als wenn ein niederfrequenteres Skalenfaktorband herangezogen wird, das nur wenige Spektralwerte umfaßt.

Eine weitere Möglichkeit, die notwendige Datenrate zu verkleinern, ohne hörbare Verzerrungen in das codierte Signal einzuführen, besteht darin, das Frequenzband mit dem größten Chaos, d. h. mit kleinstem Tonalitätsindex, auszuwählen.

Aufgrund der Empfindlichkeit des menschlichen Ohres gegenüber Rauschen wird eine gröbere Quantisierung des Rauschens im allgemeinen nicht zu hörbaren Verzerrungen führen. Selbstverständlich kann auch eine Kombination aus den genannten Möglichkeiten verwendet werden. Vorzugsweise wird jeweils nur ein Frequenzbereich gröber quantisiert, und anschließend die Datenrate wieder überprüft.

Dieses iterative Verfahren wird in der Ratensteuerschleife 42 solange durchgeführt, bis die Datenrate des Frequenzbereichscodierers 16 kleiner oder gleich der geforderten festen Datenrate ist. Der entstehende Datenstrom des Frequenzbereichscodierers 16 kann somit eine feste Datenrate einhalten, derselbe ist bei gut codierbaren Signalen verlustlos und paßt seinen Störabstand bei rauschartigen Signalen automatisch an die zur Verfügung stehende Datenrate an. Mittels des Zeitbereichscodierers 28, der von der Ratensteuerung 40 die Fehlersignale erhält, ist es möglich, aus dem nun verlustbehafteten Ausgangsdatenstrom des Frequenzbereichscodierers 16 wieder einen verlustlosen zu machen. Der Quantisierungsfehler im Zeitbereich wird als zusätzlicher Datenstrom codiert. Für die Codierung gelten hier die gleichen Möglichkeiten wie sie in Verbindung mit dem ersten Ausführungsbeispiel dargestellt wurden. Der zusätzliche Datenstrom, den der Zeitbereichscodierer 28 ausgibt, hat hier jedoch im Gegensatz zum ersten Ausführungsbeispiel eine variable Datenrate.

Ebenso wie beim ersten Ausführungsbeispiel sind auch beim zweiten Ausführungsbeispiel Anwendungen denkbar, bei denen eine Aufteilung des codierten Signals in einen relativ fehlerarm codierten frequenzbereichscodierten Hauptdatenstrom und in einen zeitbereichscodierten Restdatenstrom sinnvoll ist. Insbesondere wird dieser Ansatz für eine Übertragung über Kanäle unterschiedlicher Güte, wie z. B. das Internet oder eine Funkübertragung, nützlich sein, wobei der primäre Datenstrom, der eine feste Datenrate aufweist, immer sicher ankommt, während der sekundäre Datenstrom, der bei dem in Fig. 4 gezeigten Ausführungsbeispiel eine variable Datenrate besitzt, manchmal unter Umständen nicht ankommt.

Praktische Erfahrungen haben gezeigt, daß die resultierende Datenrate des Frequenzbereichscodierers 16 eher etwas geringer als die zulässige, d. h. vorgegebene Datenrate, sein wird. Es existieren zwei Möglichkeiten, diese restliche Rate zu verwenden. Insbesondere können Restbits zu einem Bitreservoir gesendet werden, welches in einem späteren Block verwendet werden kann, oder welches sogar für eine Zeitfehlerkorrektur ähnlich der Fehlerkorrektur in dem verlustlosen Fall herangezogen werden kann.

## Patentansprüche

1. Verfahren zum Codieren eines zeitdiskreten Audiosignals mit folgenden Schritten:
(a) Transformieren des Audiosignals in den Frequenzbereich;
(b) Quantisieren des transformierten Audiosignals mittels einer vorbestimmten Quantisierungsschrittgröße;
(c) Requantisieren des quantisierten transformierten Audiosignals mittels der vorbestimmten Quantisierungsschrittgröße;
(d) Rücktransformieren des requantisierten Audiosignals in den Zeitbereich;
(e) Bilden der Differenz zwischen dem rücktransformierten Audiosignal und dem ursprünglichen Audiosignal;
(f) Vergleichen der Differenz mit einer Fehlerschwelle (ε₀);
(g) falls die Differenz größer als die Fehlerschwelle ist, Verringern der vorbestimmten Quantisierungsschrittgröße und Wiederholen der Schritte (b) bis (f) unter Verwendung der verringerten Quantisierungsschrittgröße, sonst, Codieren des quantisierten transformierten Audiosignals.

2. Verfahren nach Anspruch 1,
bei dem der Schritt (a) folgende Teilschritte aufweist:
(a1) Fenstern des zeitdiskreten Audiosignals, um sich überlappende Blöcke von Abtastwerten zu erhalten;
(a2) Transformieren der sich überlappenden Blöcke in den Frequenzbereich;
bei dem der Schritt (e) folgende Teilschritte aufweist:
(e1) Bilden der Differenz zwischen der Summe aus dem rücktransformierten Audiosignal des aktuellen Blocks und aus dem entsprechenden Teil des vorausgehenden Blocks und dem ursprünglichen Audiosignal in einem ersten Bereich, in dem sich der aktuelle Block und der vorherige Block überlappen;
(e2) Bilden der Differenz zwischen dem rücktransformierten Audiosignal und dem rücktransformierten nicht-quantisierten Audiosignal in einem zweiten Bereich, in dem der aktuelle Block und der nächste Block überlappt sein würden;
bei dem der Schritt (g) ferner folgenden Teilschritt aufweist:
(g1) falls die Differenz im ersten Bereich größer als die Fehlerschwelle ist, Wiederholen der Schritte (b) bis (f) unter Verwendung der verringerten Quantisierungsschrittgröße, oder, falls die Differenz im zweiten Bereich größer als eine von der ersten Fehlerschwelle abgeleitete zweite Fehlerschwelle ist, Wiederholen der Schritte (b) bis (f), wobei die zweite Fehlerschwelle sicherstellt, daß die Differenz zwischen der Summe aus dem zweiten Bereich des aktuellen Blocks und aus dem ersten Bereich des nächsten Blocks und dem entsprechenden rücktransformierten nicht-quantisierten Audiosignal kleiner oder gleich der ersten Fehlerschwelle ist.

3. Verfahren nach Anspruch 1,
bei dem der Schritt (a) folgende Teilschritte aufweist:
(a1) Fenstern des zeitdiskreten Audiosignals, um sich überlappende Blöcke von Abtastwerten zu erhalten;
(a2) Transformieren der sich überlappenden Blöcke in den Frequenzbereich;
bei dem der Schritt (e) folgende Teilschritte aufweist:
(e1) Bilden der Differenz zwischen der Summe aus dem rücktransformierten Audiosignal der aktuellen Blöcke und aus dem entsprechenden Teil des vorausgehenden Blocks und dem ursprünglichen Audiosignal in einem ersten Bereich, in dem sich der aktuelle Block und die vorherigen Blöcke überlappen;
(e2) Bilden der Differenz zwischen dem rücktransformierten Audiosignal und dem rücktransformierten nicht-quantisierten Audiosignal in einem zweiten Bereich, in dem der aktuelle Block und die nächsten Blöcke überlappt sein würden;
bei dem der Schritt (g) ferner folgenden Teilschritt aufweist:
(g1) falls die Differenz im ersten Bereich größer als die Fehlerschwelle ist, Wiederholen der Schritte (b) bis (f) unter Verwendung der verringerten Quantisierungsschrittgröße, oder, falls die Differenz im zweiten Bereich größer als eine von der ersten Fehlerschwelle abgeleitete zweite Fehlerschwelle ist, Wiederholen der Schritte (b) bis (f), wobei die zweite Fehlerschwelle sicherstellt, daß die Differenz zwischen der Summe aus dem zweiten Bereich des aktuellen Blocks und aus dem ersten Bereich der nächsten Blöcke und dem entsprechenden rücktransformierten nicht-quantisierten Audiosignal kleiner oder gleich der ersten Fehlerschwelle ist.

4. Verfahren nach Anspruch 2, bei dem sich aufeinanderfolgende Blöcke jeweils zur Hälfte überlappen, und bei dem die zweite Fehlerschwelle die Hälfte der Summe der ersten Fehlerschwelle und des Werts 0,5 beträgt.

5. Verfahren nach einem der vorhergehenden Ansprüche, bei dem der Schritt (g) ferner folgenden Teilschritt aufweist:
(g1) Codieren der Differenz im Zeitbereich.

6. Verfahren nach einem der vorhergehenden Ansprüche,
bei dem das transformierte Audiosignal in benachbarte Frequenzbänder gruppiert wird; und
bei dem die Schritte (e) und (f) und (g) frequenzbandweise durchgeführt werden,
wobei lediglich für ein Frequenzband, das im Zeitbereich einen Fehler größer als die Fehlerschwelle hervorruft, die Quantisierungsschrittgröße verringert wird.

7. Verfahren nach einem der vorhergehenden Ansprüche,
bei dem transformierte Audiosignal in benachbarte Frequenzbänder gruppiert wird, wobei der Schritt (g) ferner folgende Teilschritte aufweist:
(g2) falls eine Datenrate des codierten quantisierten transformierten Audiosignals eine vorbestimmte Datenrate überschreitet, Auswählen eines Frequenzbandes unter Berücksichtigung audiosignalstatistischer Aspekte;
(g3) Auswählen einer vergrößerten Quantisierungsschrittgröße für das ausgewählte Frequenzband und Wiederholen der Schritte (b) bis (f);
(g4) Codieren des ausgewählten Frequenzbandes, wenn die Datenrate kleiner oder gleich der vorbestimmten Datenrate ist, wobei das ausgewählte Frequenzband mit einer Quantisierungsschrittgröße quantisiert ist, die sich auch der Iteration des Schritts (g3) ergibt.

8. Verfahren nach Anspruch 7, bei dem das Frequenzband mit dem größten Signal/Rausch-Abstand ausgewählt wird.

9. Verfahren nach Anspruch 7 oder 8, bei dem das Frequenzband mit der höchsten Mittenfrequenz ausgewählt wird.

10. Verfahren nach einem der Ansprüche 7 bis 9, bei das Frequenzband mit dem geringsten Tonalitätsindex ausgewählt wird.

11. Verfahren nach einem der Ansprüche 5 bis 10, bei dem das Codieren der Differenz im Zeitbereich unter Angabe der Position des entsprechenden Abtastwerts im Block und unter Angabe des Werts der Differenz an dieser Stelle stattfindet.

12. Verfahren nach Anspruch 11, bei dem die Angabe der Position relativ bezüglich des Blockanfangs oder der Position des vorherigen Fehlers durchgeführt wird, während der Wert und/oder die Position Huffman-codiert wird bzw. werden.

13. Vorrichtung zum Codieren eines zeitdiskreten Audiosignals, mit folgenden Merkmalen:
(a) einer Transformationseinrichtung (12) zum Transformieren des Audiosignals in den Frequenzbereich;
(b) einer Quantisierungseinrichtung (14) zum Quantisieren des transformierten Audiosignals mittels einer vorbestimmten Quantisierungsschrittgröße;
(c) einer Requantisierungseinrichtung (22) zum Requantisieren des quantisierten transformierten Audiosignals mittels der vorbestimmten Quantisierungsschrittgröße;
(d) einer Rücktransformationseinrichtung (24) zum Rücktransformieren des requantisierten Audiosignals in den Zeitbereich;
(e) einer Subtraktionseinrichtung (26) zum Bilden der Differenz zwischen dem rücktransformierten Audiosignal und dem ursprünglichen Audiosignal;
(f) einer Vergleichseinrichtung (26) zum Vergleichen der Differenzen mit einer Fehlerschwelle;
(g) einer Codiereinrichtung (16) zum Codieren des quantisierten transformierten Audiosignals, falls die Differenz kleiner oder gleich der Fehlerschwelle ist; und
(h) einer Steuereinrichtung (32) zum Verringern der vorbestimmten Quantisierungsschrittgröße und zum Wiederholen der Schritte (b) bis (f) unter Verwendung der verringerten Quantisierungsschrittgröße, falls die Differenz größer als die Fehlerschwelle ist.

14. Vorrichtung nach Anspruch 13, die ferner eine Zeitbereichscodiereinrichtung (28) zum Codieren der Differenz aufweist.

15. Vorrichtung nach Anspruch 13 oder 14, die ferner eine Ratensteuerungseinrichtung (40) aufweist, um die Quantisierungsschrittgröße für rauschartige Anteile des Audiosignals zu erhöhen, falls die durch die Codiereinrichtung benötigte Datenrate höher als eine vorgegebene Datenrate ist.

16. Vorrichtung nach Anspruch 15, bei der die Ratensteuerungseinrichtung (40) ferner eine Tonalitätsbestimmungseinrichtung aufweist, um tonale von rauschartigen Si-gnalanteilen zu unterscheiden.
